# EUROPEAN PATENT APPLICATION

(11) **EP 4 450 844 A1**
(43) Date of publication of application: **23.10.2024**
(21) Application number: 23168791.4
(22) Date of filing: 19.04.2023
(51) Int. Cl.: F16D 65/00, F16D 65/847

(54) **BRAKE DUST FILTER DEVICE FOR DISC BRAKE ASSEMBLY**

(71) Applicant: MANN+HUMMEL GmbH, 71636 Ludwigsburg (DE)
(72) Inventor: WELLER, Benedikt, 71711 Steinheim (DE)
(74) Representative: Mann + Hummel Intellectual Property

(57) **Abstract**

A brake dust filter device for a disc brake assembly includes a housing encompassing a reception space for receiving a brake disc of the disc brake assembly, the housing including first and second housing side walls being spaced apart, the first housing side wall including at least one ventilation opening, and a housing circumferential wall being connected to the first and second housing side walls. The brake dust filter device further includes a filter element including a filter medium, the filter element being arranged in the housing, and a cover plate being arranged adjacent to the ventilation opening, the cover plate being moveable between a closed position in which the cover plate covers the ventilation opening and an open position in which the cover plate allows an air flow through the ventilation opening.

## Description

### Technical Field

The invention relates to a brake dust filter device for a disc brake assembly. Furthermore, the invention relates to a housing of a brake dust filter device and to a disc brake assembly.

### Background Art

US 2023/0035373 A1 discloses a brake dust particle filter for a disc brake assembly with a housing that has a first housing side wall, a second housing side wall, and a housing circumferential wall, wherein the housing circumferential wall extends between the first housing side wall and the second housing side wall. A filter insert with a filter medium is arranged in the housing and extends along one of the first and second housing side walls and along the housing circumferential wall. The filter insert has a curved circumferential edge. The housing has a curved receiving groove. The curved circumferential edge engages the curved receiving groove. The filter insert is L-shaped and is configured to at least partially cover a friction surface and a circumferential surface of a brake disc of the disc brake assembly. The curved circumferential edge of the filter insert projects past the filter medium.

EP 2 522 876 A1 describes a disc brake assembly which comprises a rotor that is turned by motion of a vehicle; a caliper and brake pads attached to the caliper; the rotor having an inside face periphery, an outside face periphery and an outside diameter periphery; a filter disposed within a shroud, the shroud being disposed proximate to the rotor so as to cover at least about 70% of at least one of the inside face and the outside face peripheries wherein the shroud houses a radially inner filter and a radially outer filter, and wherein when said vehicle is in motion, rotation of said rotor moves brake dust into said radial inner filter and said radially outer filter.

DE 10 2021 114 797 A1 discloses a brake dust particle filter for a disc brake arrangement with a brake disc and a brake caliper, the brake dust particle filter having a housing with two housing side walls and with a housing peripheral wall, wherein an L-shaped filter insert with a filter medium is accommodated in the housing which extends on one of the housing side walls and on the housing peripheral wall.

It is an object of the invention to provide a brake dust filter device which works safely over a long period of time.

### Summary

According to the invention, a brake dust filter device is provided which can be used in vehicles, in particular in motor vehicles, to collect dust and particles which are produced by friction in a disc brake assembly when the vehicle brake is actuated. The brake dust filter device comprises a ring-shaped or partially ring-shaped housing encompassing a reception space for accommodating a disc of the disc brake assembly, the housing comprising first and second housing side walls being spaced apart and a housing circumferential wall being connected to the first and second housing side walls. The brake dust filter device further comprises a filter insert or filter element with a filter medium, the filter element being arranged in the housing and configured to filter the brake dust from the disc brake assembly.

The brake dust that is collected in the filter medium of the filter element gradually degrades the ability to take up additional brake dust and obstructs the air flow through the filter medium. The differential air pressure in the reception space accommodating the disc of the disc brake assembly rises which makes effective cooling of the disc difficult so that eventually the temperature also rises.

In order to avoid overheating of the disc and maintain the performance of the disc brake assembly, a wall of the housing comprises at least one ventilation opening which allows bypassing the filter medium when in an open position. A cover plate is arranged adjacent to the ventilation opening, the cover plate being moveable between a closed position and an open position while in the closed position the cover plate covers the ventilation opening and in the open position the cover plate allows air flowing through the ventilation opening. The brake dust filter device further comprises a control element which moves the cover plate between the closed position and the open position depending on the actual temperature and/or pressure in the reception space of the housing.

In a regular operating mode when the temperature and/or the pressure in the reception space of the housing are below the respective limit, the cover plate is in the closed position so that the air cannot bypass the filter medium. The cover plate automatically opens when the temperature and/or the pressure in the reception space of the housing exceed a limit. This is accomplished with the help of the control element which automatically moves the cover plate from the closed position to the open position. Hence, the advantage of the inventive design is that heat generated by the friction when actuating the disc brake assembly can kept to a level which does not impair the operability.

The design of the control element can easily be adapted to the desired limit of the temperature and/or pressure that must be exceeded in order to move the cover plate into the open position. It is not necessary for a person to manually intervene in order to move the cover plate into the open position.

In a further advantageous embodiment, also the movement of the cover plate from the open position back to the closed position is accomplished automatically as soon as the temperature and/or the pressure drop below a respective limit. This movement is performed either by the control element or by one or several spring elements which bias the cover plate into the closed position. In the latter case, when the control element returns into its initial position the spring element automatically moves the cover plate into the closed position.

In another advantageous embodiment, the wall of the housing comprises a series of ventilation openings arranged in a row which are all covered by the cover plate in the closed position. Hence, all ventilation openings are simultaneously open and closed by moving the cover plate.

In another preferred embodiment, the ventilation opening is arranged in a side wall of the housing. It is sufficient that only one side wall contains the ventilation openings while the other side wall is designed as continuous wall without ventilation openings. In an alternative embodiment, both side walls are designed with ventilation openings.

The control element is designed either as a passive component or as an active component. In case of a passive component the control element does not have to be energized by electric current, but reacts to any change of temperature and/or pressure. For example, the control element is designed as thermal element which elongates with rising temperatures and decreases with dropping temperatures. For example, the passive thermal element is made of wax which moves the cover plate from the closed position to the open position when the temperature rises and the wax material expands. The thermal element may comprise wax material but also some other material like metal as a basis to which the wax material adheres.

In case of one or more active components, the control element may be designed as an electric motor or as an electromagnetic actuator. In case of the one or more active components, for brake systems, the control element may use and activate hydraulic and or pneumatic energy to open a gallery.

According to another preferable embodiment the control element stands in a position which corresponds to the cover plate in the closed position as long as the brake dust filter device is in its normal condition while the actual temperature and/or pressure is in a non-critical range. In this case, the control element remains in an out-of-order position without impact on the cover plate which is its closed position. But if the actual temperature and/or the actual pressure rises and reaches a critical value the control element moves the cover plate into the open position.

In another embodiment a spring element is fixed to the cover plate which acts on the cover plate and biases the cover plate into the closed position. Hence, the control element moves the cover plate against the force of the spring element from the closed position into the open position. When the control element moves back into its initial position the cover plate is moved automatically into its closed position by the force of the spring element without impact of the control element. It may be advantageous to use more than one spring element, for example two spring elements. The spring element can be arranged between the housing and the cover plate und may be located either next to the control element or with distance to the control element.

In yet another embodiment the cover plate is ring-shaped or partly ring-shaped and conducts a circular movement when being moved between the closed position and the open position. The cover plate can be partly ring shaped, and the housing can be partly or fully ring shaped. In a preferred embodiment, both the housing and the cover plate are arranged in a concentric way and share a common axis. The cover plate makes a circular movement about this axis when being moved between the open and the closed position.

According to another preferable embodiment the cover plate is arranged at the inner side of a side wall of the housing which accommodates one or more ventilation openings. In combination with the concentric arrangement the circular movement of the cover plate opens and closes the ventilation opening in the side wall of the housing.

In another embodiment the cover plate is slideably mounted at a side wall of the housing. Grooves in the housing accommodating the cover plate may support the sliding movement of the cover plate in or at the housing.

The invention also refers to a housing of a brake dust filter device, the housing being designed as the housing in the aforementioned brake dust filter device.

Furthermore, the invention refers to a disc brake assembly comprising an aforementioned brake dust filter device.

### Brief Description of Drawings

A description will now be given as a non-limiting example of a form of embodiment of a brake dust filter device according to the present invention. Reference will be made to the attached drawings, in which:
Fig. 1 is a perspective view of a disc brake with a brake dust filter device;
Fig. 2 is a plan view of the inner part of a housing of the brake dust filter device without brake disc which comprises a moveable cover plate covering ventilation openings in the housing;
Fig. 3 is a plan view similar to fig. 2, but with the cover plate in an open position;
Fig. 4 is a plan view of the cover plate;
Fig. 5 is a perspective view of the cover plate;
Fig. 6 is a sectional view of the cover plate being guided in a groove in the housing;
Fig. 7 is a plan view of the brake dust filter device;
Fig. 8 is a sectional view of the brake dust filter device according to line VIII-VIII in fig. 7;
Fig. 9 is front view of the brake dust filter device; and
Fig. 10 is a sectional view of the brake dust filter device according to line X-X in fig. 9 in the open position of the cover plate.

In the figures, same components are provided with the same reference numerals.

### Detailed Description

In the figures a brake dust filter device 1 is depicted which can be used in motor vehicles to collect dust and particles produced by friction in a disc brake 2 when the vehicle brake is actuated. The disc brake 2 is part of a vehicle disc brake assembly which is designed as a friction brake and, in addition to a brake disc 3, comprises a brake caliper being placed on a brake caliper holder 4 and is a carrier of brake linings which are applied frictionally to the brake disc 2 during a braking process. The disc brake 2 is located on a wheel of the vehicle. The brake dust filter device 1 is fixed to the brake caliper holder 4.

The brake dust filter device 1 comprises a ring-shaped housing 5 which accommodates a filter element 8 in which the brake dust is collected. The housing 5 has first and second housing side walls 5a, 5b being spaced apart and parallel to each other, and a housing circumferential wall 5c being connected to the first and second housing side walls 5a, 5b, the housing side walls 5a, 5b and the housing circumferential wall 5c defining a reception space for accommodating a disc of the disc brake assembly.

The first housing side wall 5a has a series of ventilation openings 6, each with a substantially rectangular cross section, and which are aligned along the circumferential direction. The second, opposite housing side wall 5b does not necessarily have ventilation openings; however, in another embodiment also the second housing side wall 5b may be furnished with ventilation openings.

The housing circumferential wall 5c has a series of apertures 7 through which in the regular operating mode air flows that has passed the filter element 8 being placed on the inside of the housing circumferential wall 5c.

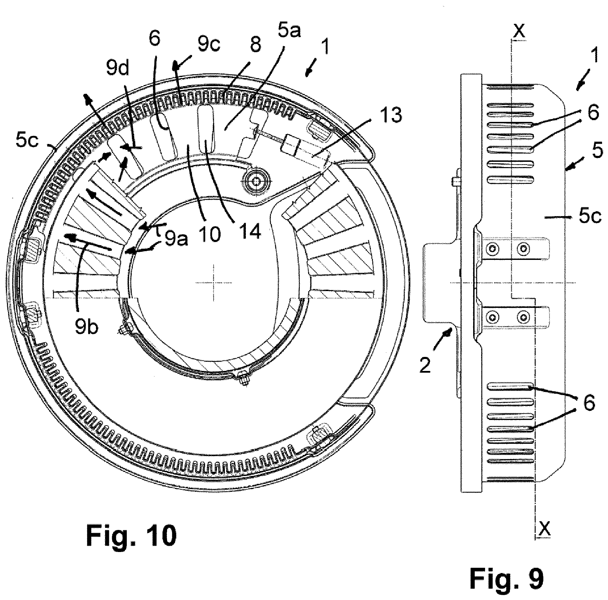

The air flow is depicted in fig. 10 which is a sectional view of the brake dust filter device 1 according to line X-X in fig. 9. According to numeral 9a air emanates from the inner ventilation of the brake disc and is then directed in the radial direction according to numeral 9b. A partial air flow is directed radially through the filter element 8 and the apertures 7 in the housing circumferential wall 5c according to numeral 9c. Another partial air flow is directed axially through the open ventilation openings 6 in the housing side wall 5 according to numeral 9d.

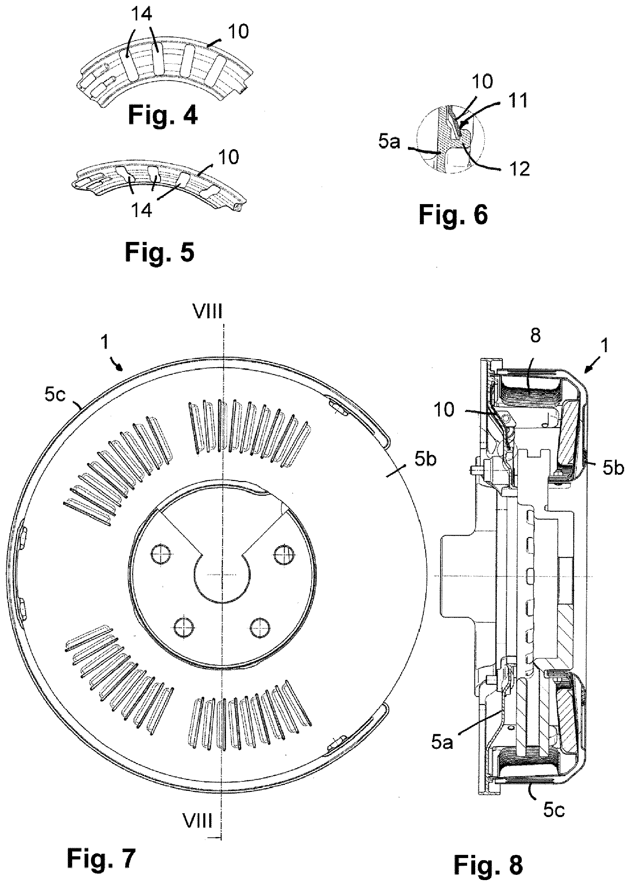

A cover plate 10 is arranged in the housing 5 adjacent to the ventilation openings 6. As depicted in fig. 4 and fig. 5 the cover plate 10 is shaped as a sub-circle arc spanning an angle of approximately 90°. The cover plate 10 is guided at the inner side of the housing 5 adjacent to the housing circumferential wall 5c and is moveable between a closed position and an open position. In the closed position the cover plate 10 covers the ventilation openings 6 while in the open position the cover plate 10 does not cover the ventilation openings 6, hence allowing an axial air flow through the ventilation openings 6.

The terms "axial" and "radial," respectively, refer to the axis of the disc brake 2 which is identical with the rotational axis of the wheel. "Axial direction" means in the direction of the axis of the disc brake 2, while "radial direction" means orthogonally to the direction of the axis of the disc brake 2.

The cover plate 10 is guided in a groove or nut 11 on the inner side of the first housing side wall 5a comprising the ventilation openings 6. Axially extending at the inner side of first housing side wall 5a a flange 12 is arranged which accommodates the groove 11 (fig. 6). When moving between the closed and the open position the cover plate 10 moves in the groove 11 executing a circular movement.

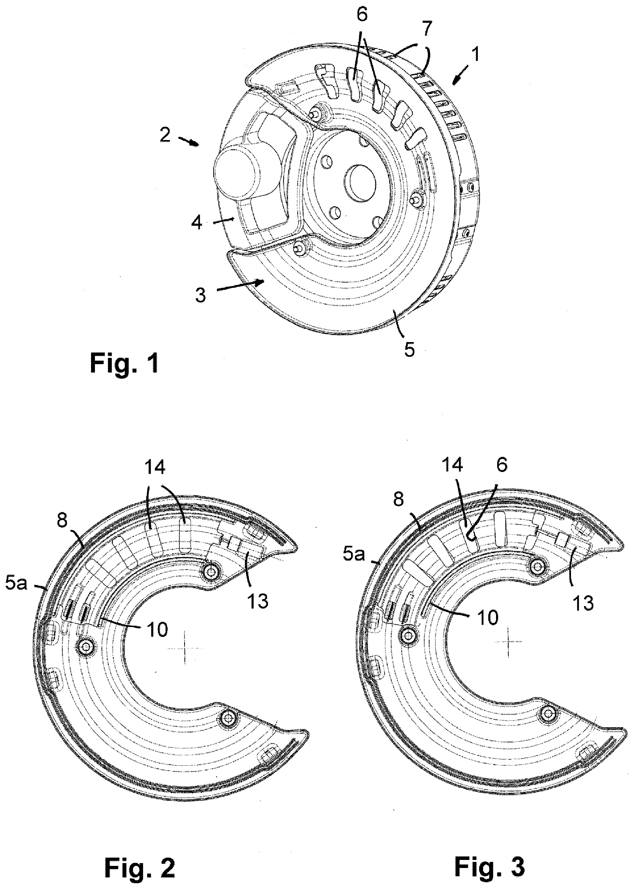

The movement of the cover plate 10 between from the closed position to the open position is accomplished by a control element 13 (fig. 2, 3, 10) which is configured as a passive thermal element. The control element 13 expands with rising temperatures and contracts with sinking temperatures. The thermal part of the control element 13 is made of wax. Due to its passive design the control element 13 does not have to be energized by electric current or other means but instead reacts to the temperature of the surrounding atmosphere. The control element is designed as a telescope cylinder with one end fixed to the first housing side wall 5a and the other end fixed to the cover plate 10.

The cover plate 10 comprises several openings 14 which correspond to the ventilation openings 6 in the first housing side wall 5a. In the open position as shown in fig. 3 and fig. 10, the openings 14 in the cover plate 10 are aligned with the ventilation openings 10 so that air can flow through the ventilation openings 10 as depicted with reference numeral 9c in fig. 10. In the closed position as shown in fig. 2, the cover plate 10 is moved into a position so that a solid part of the cover plate 10 lies on the ventilation openings 14 and any air flow through the ventilation openings 6 is prevented.

The control element 13 is positioned at a first circumferential front side of the cover plate 10. Opposite to the control element 13 two spring elements 15 are positioned at the second circumferential front side of the cover plate 10 biasing the cover plate 10 into the closed position. One end of the spring elements 15 is fixed to the first housing side wall 5a and the other end of the spring elements 15 is fixed to the cover plate 10.

In a regular operating mode, the temperature in the reception space is below a temperature limit. The thermal component of the control element 13 remains in its initial position that corresponds with the closed position of the cover plate 10. The regular operating mode is executed as long as the filter element 8 is not degraded by dust particles so that air can pass the filter element 8 and effective cooling is maintained.

When the function of the filter element 8 gradually degrades due to dust particles which are collected in the filter element, the air flow is reduced and effective cooling may no longer be accomplished. Hence, the temperature in the reception space rises and activates the control element 13 which expands and moves the cover plate 10 from the closed position to the open position against the force of the spring elements 15 so that the ventilation openings 6 are also in the open position. When the temperature sinks the control element 13 contracts, and the cover plate 10 is pulled back into the closed position by the spring elements 15 so that the ventilation openings 6 are closed again.

### Reference Numbers

- 1: brake dust filter device
- 2: disc brake
- 3: brake disc
- 4: brake caliper holder
- 5: housing
- 5a,b: housing side wall
- 5c: housing circumferential wall
- 6: ventilation opening
- 7: aperture
- 8: filter element
- 9a,b,c,d: air flow
- 10: cover plate
- 11: groove
- 12: flange
- 13: control element
- 14: opening
- 15: spring element

## Claims

1. A brake dust filter device (1) for a disc brake assembly, the brake dust filter device (1) comprising:
a housing (5) encompassing a reception space for receiving a brake disc (3) of the disc brake assembly, the housing (5) comprising:
first and second housing side walls (5a, 5b) being spaced apart, the first housing side wall (5a) comprising at least one ventilation opening (6); and
a housing circumferential wall (5c) being connected to the first and second housing side walls (5a, 5b);
a filter element (8) comprising a filter medium, the filter element (8) being arranged in the housing (5);
a cover plate (10) being arranged adjacent to the ventilation opening (6), the cover plate (10) being moveable between a closed position in which the cover plate (10) covers the ventilation opening (6) and an open position in which the cover plate (10) allows an air flow through the ventilation opening (6); and
a control element (13) being configured to move the cover plate (10) between the closed position and the open position, based on an actual temperature and/or an actual pressure in the reception space of the housing (5).

2. The brake dust filter device according to claim 1, wherein the first housing side wall (5a) comprises a series of ventilation openings (6) being arranged in a row and being covered by the cover plate (10) in the closed position.

3. The brake dust filter device according to any of the preceding claims, wherein the control element (13) is a passive component.

4. The brake dust filter device according to any of the preceding claims, wherein the control element (13) is a thermal element configured to expand with rising temperatures.

5. The brake dust filter device according to claim 4, wherein the thermal element is made of wax.

6. The brake dust filter device according to any of the preceding claims, wherein, in a regular operating mode, the control element (13) is in a position corresponding to the cover plate (10) in the closed position.

7. The brake dust filter device according to any of the preceding claims, further comprising a spring element (15) being fixed to the cover plate (10) and biasing the cover plate (10) into the closed position.

8. The brake dust filter device according to any of the preceding claims, wherein the cover plate (10) is ring-shaped or partly ring-shaped and conducts a circular movement.

9. The brake dust filter device according to any of the preceding claims, wherein the cover plate (10) is arranged at an inner side of the first housing side wall (5a).

10. The brake dust filter device according to any of the preceding claims, wherein the cover plate (10) is slideably mounted at the first housing side wall (5a).

11. A housing (5) of the brake dust filter device (1) according any of the preceding claims.

12. A disc brake assembly comprising the brake dust filter device (1) according to any of claims 1 to 10.
